# EUROPEAN PATENT SPECIFICATION

(11) **EP 2 199 150 B1**
(45) Date of publication and mention of the grant of the patent: **27.07.2011**
(21) Application number: 08022078.3
(22) Date of filing: 19.12.2008
(51) Int. Cl.: B60P 3/08, B60P 1/02

(54) **Transporting unit suitable for carrying vehicular and non-vehicular cargo**
Transportfahrzeug für Fahrzeuge und normale Beladung
Unité de transport adaptée au transport de chargement véhiculaire et non véhiculaire

(43) Date of publication of application: 23.06.2010
(73) Proprietor: Getrex Special Products B.V., 5865 AP Tienray (NL)
(72) Inventor: Gerritsen, Bart J.C., 5865 AP Tienray (NL)
(74) Representative: Wiebusch, Manfred

(56) References cited:
- EP-A- 1 745 981
- WO-A-98/54026
- WO-A-02/057112
- WO-A-2004/078632
- DE-A1-102005 036 590
- GB-A- 2 242 654
- US-A- 2 611 640
- US-A- 5 855 378

## Description

The present invention pertains to a transporting unit suitable for carrying vehicular and non-vehicular cargo comprising a chassis extending substantially in a horizontal plane and a vertically movable floor for carrying at least part of the cargo.

Such a transporting unit, having as a basic part a chassis (carrying frame, in the known embodiment provided with wheels for controlled road transport) is known from US 4,992,013. In this USA patent, the transporting unit is an enclosed trailer for the hauling of motor vehicles (belonging to the group of vehicular cargo) and normal freight (non-vehicular cargo). The wheeled vehicles and freight can be carried in the same enclosed trailer, allowing a single trailer to be a versatile addition to the fleets of normal cargo transporting units and specially adapted, vehicular cargo only, transporting units.

To maximise the utility of the transporting unit, the inner measures are typically constructed to the maximum height, width and length permitted by the laws of the government maintaining the roads over which the unit will travel, as well as technical, often mechanical limits. Moreover, the unit comprises one or more horizontally disposed floors which may serve as vehicle tracks. Each of these floors has a width and length equal to or greater than that of the vehicles intended to be transported in the unit. A hydraulic system is present to elevate and lower each of the floors, or even to tilt them to bring the trailing end of a floor in closer proximity to a floor of the transporting unit to facilitate loading and unloading of the vehicles. When the transporting unit is to be used for hauling non-vehicular cargo, the floors may be lowered to the limit of travel of the hydraulic system, or alternatively may be raised to the maximum extent of travel of the system, thereby moving the loading floors to a position less likely to obstruct other cargo when the unit is used for normal (non-vehicular) freight. As such, the known transporting unit is suitable for carrying wheeled vehicles such as automobiles, small trucks and the like (vehicular cargo) and other cargo such as boxes, loaded pellets, small wheeled containers, trolleys and the like (non-vehicular cargo).

The known system comprises hydraulic actuators which are continuous acting cylinders that extend from the chassis to a top end of the transporting unit. The cylinders do not require a fixed piston and a rod, but comprise an inner piston disk which is free to travel from one end of the cylinder to the other end. On opposite sides of the faces of the disk are affixed the ends of a continuous cable. This cable is routed through fluid-type seals disposed at opposing ends of the hydraulic cylinder. The outer ends of the cable are secured to a trolley which is operatively connected to the floor. Each floor is connected to four of these trolleys, two at the leading edge angles of each movable floor, two at the trailing edge angles of each movable floor. In operation, when the disks are moved through their length of travel within each corresponding cylinder, the trolleys (carrying the floor) move in the opposite direction and can thus be lowered to a position adjacent the actual transporting unit floor or elevated to a position adjacent a top and of the transporting unit.

The known system however has several disadvantages. First of all, the hydraulic system requires a fluid tight seal around the cables at the entry point of the cylinders. It appears that such a seal is prone to leakage. Also, the use of cables makes it difficult for individual movements of the trolleys to be in complete synchronisation. Cables are prone to stretching, and each cable in practice stretches differently (different stretch distance in time). Also, the known system is relatively expensive due to the presence of many separate parts in the hydraulic actuators. Knowing this one would be inclined to argue that the use of common hydraulic rams, could solve or at least mitigate the problems of the known transporting unit. However, the skilled person is aware of the fact that this known system is especially devised for overcoming the problems that prior art transporting units, having a floor (or floors) which is vertically moved by using hydraulic cylinders, have. As US 4,992,013 describes, such a cylinder, even when being a segmented (multiple action) cylinder, has a fixed physical length when fully retracted. Therefore the floor cannot be retracted to a position in close proximity to either the floor or roof of the transporting unit. Namely, to ensure a useful operating range to hydraulic cylinders, such cylinders must be of sufficient size to position the vehicle loaded on the floor to a sufficient height above the floor to allow a second layer of vehicles to be driven into and carried on the floor of the trailer. The consequence is that the dimensions of the cylinders are unacceptable to effectively establish a required minimum distance between the movable floor and the actual floor of the transporting unit. Therefore, the use of conventional hydraulic cylinders has not been considered to be a reasonable alternative for a transporting unit suitable for (alternately) carrying vehicular and non-vehicular cargo.

The object of the present invention is to overcome or at least mitigate the problems encountered in prior art transporting units suitable for carrying vehicular and non-vehicular cargo.

To this end a transporting unit according to the preamble has been devised, further comprising multiple segmented hydraulic cylinders rigidly connected to the floor around its circumference for providing the vertical movement, multiple frame parts, vertically extending from the chassis to a position adjacent a top end of de transporting unit, wherein each hydraulic cylinder is connected to a corresponding frame part near the said position such that the floor is in hanging engagement with the cylinders around its circumference.

Applicant recognised that for enabling the carrying of vehicular as well as non-vehicular cargo, a movable floor must be present indeed, but this floor does not need to be movable over the entire vertical space in the transporting unit to make optimal use of the carrying capacity. It appears to suffice that the floor is movable from a first position adjacent the actual floor of the transporting unit (i.e. a plane covering the chassis), to a second position which leaves a space between the movable floor and a top end of the transporting unit (typically, but not necessarily, a closed roof) such that a regular vehicle fits into this space. Such a space typically is about 130 to 180 cm. Being able to move the floor even higher, for example in the proximity of the top end of the transporting unit, does not provide a more efficient use of the inner space of the unit since a regular vehicle will no longer fit into the remaining space. Once realising that leaving a minimum distance between the top end of the transporting unit and the movable floor of for example about 100 cm will pose no disadvantage for the optimal use of this type of transporting unit, one can make use of this minimum distance to place hydraulic cylinders. Since the distance extends from the top end of the transporting unit towards the chassis, the hydraulic cylinders are actually hanging down from the top end of the transporting unit and extend vertically towards the floor. This way, the floor is also in hanging engagement with the cylinders. To provide sufficient extension length the cylinders need to be segmented, that is, they are construed as multiple action cylinders. Such cylinders are commonly known in the art and could for example be telescopic. Applicant realised that in most cases the roof of a transporting unit is not suitable to provide support for the cylinders and the floor that is rigidly connected to these cylinders. Therefore, in the present invention frame parts are comprised, which parts extend vertically from the rigid chassis towards the top end of the transporting unit. Such part could for example be a simple steal beam, or a rigid plate like rong. Near the top end the parts are constituted such that the cylinders can be connected to them, for example by having a horizontal part with sufficient strength that extends toward the centre line of the transporting unit. Two opposing frame parts could be connected by having the horizontal extended parts meeting each other and being connected, or even being formed as one piece. The horizontal part could serve to support the base of the segmented hydraulic cylinder, for example by using common fastening means such as bolts and nuts. By using segmented hydraulic cylinders that more or less hang from the top of the unit and extend towards the chassis, one can on the one hand fully use the available space in the transporting unit when carrying vehicular or non-vehicular cargo (or both at the same time), and solves or at least mitigates the problems associated with the hydraulic means as known from US 4,992,013. The floor is rigidly connected to the other end of multiple cylinders around its circumference (meaning that the floor is horizontally supported by these cylinders; in theory, three cylinders could suffice). Rigidly in this sense means that the vertical position of the floor with respect to the cylinders is known beforehand and does not depend on uncontrolled elastic deformations. A rigid connection does not preclude that the floor can move, even at the site of connection, with respect to each cylinder.

Although not essential for the present invention, the transporting unit may be closed to provide protection for the cargo from the environment, in particular elemental forces of nature but also hazards of road haulage such as dust and grime, gravel and the like. In particular when the cargo comprises vehicles, a good degree of protection may be advantageous or even indispensable, for example because of insurance reasons. The enclosure in principle provides a six-sided container, rectangular in cross section, mounted on the wheeled chassis. The enclosure sides, floor and top may be of any suitable material such as fore example, rubber, canvas, wood, metal, flexible (reinforced) polymer material, glass etc

It is noted that GB 2 242 654 discloses a transporting unit with a vertically movable floor for carrying cargo, the floor being connected to multiple hydraulic cylinders rigidly connected to the floor around its circumference for providing the vertical movement. However, only one side of the floor is in hanging engagement with the hydraulic cylinders, whereas in the present invention the floor is in hanging engagement with hydraulic cylinders around its circumference. In the transporting unit as disclosed in the GB patent applications, two of the supporting cylinders are positioned underneath the floor such that this transporting unit suffers from the same problems as described in the US patent as referred to here-above.

In an embodiment the floor is substantially rectangular and is connected to two hydraulic cylinders at its leading edge corners (with respect to the front side of the transporting unit) and two hydraulic cylinders at its trailing edge corners, the leading edge cylinders being actuable independent from the trailing edge cylinders. In this embodiment the floor is connected at (i.e. near) its four corners with the cylinders. By having a constitution wherein the leading edge cylinders can be actuated independently from the trailing edge cylinders, the floor can be tilted to make loading and unloading of cargo, in particular vehicular cargo easier.

In another embodiment the hydraulic cylinders are such that elevating and lowering of the floor requires hydraulic actuation. In this embodiment not only the elevating of the floor requires hydraulic actuation, but also the lowering. In theory one could dispense with using hydraulic actuation to lower a floor, since gravitational forces could also be used to lower the floor. However, using gravitational forces means that the speed at which the floor is lowered cannot be controlled. By using cylinders that need hydraulic actuation for expanding as well as contracting (which cylinders are commonly known as such), improved control is obtained.

In yet another embodiment each segmented cylinder comprises multiple separate hydraulic cylinders rigidly connected to each other. In this embodiment the segmentation to provide the multiple hydraulic actions arises from the use of separate cylinders which are rigidly coupled. Applicant found that this type of segmented cylinders is ideally suitable for precise control. Other types of cylinders such as telescopic multiple action hydraulic cylinders are more difficult to control and more sensitive for leakage. In a further embodiment of the coupled type segmented cylinders, three cylinders are coupled in a M-like formation to form the segmented hydraulic cylinder. It appears that this type of cylinder is ideally suitable in the present transporting unit since a momentum at the base of the cylinder (where it is connected to the vertically extending frame part) can be prevented or at least minimised when moving or tilting the floor.

In an embodiment the floor is in operative engagement with at least one of the said frame parts, such that a horizontal movement of the floor is substantially prevented. Applicant realised that since the floor is in hanging engagement, it is prone to relative US patent as referred to here-above.
From WO 98/54026 a vehicle with a cargo lift is known. However, this vehicle does not show a vertically movable floor situated above a first floor, nor does it show segmented hydraulic cylinders.
EP 1745981 describes a transport unit comprising a lift unit that may extend outside the transport unit to load externally placed cargo. The lift unit however is based on wires and motor drives and no segmented hydraulic driving cylinders are mentioned. Moreover, the lift is releasably connected to a cargo loading floor since the floor has to be decoupled from the lift after the cargo is loaded.
DE 10 2005 036 590 shows a vehicle with an internal cargo lift, in particular to load small cars in a people carrier. This vehicle does not show a vertically movable floor situated above a first floor, nor does it show segmented hydraulic cylinders.
US 2,611,640 pertains to a cargo trailer having two loading platforms. However, none of the platforms is in hanging engagement with hydraulic cylinders.
US 5,855,378 discloses an elevator suspension for vertically moving a loading platform of a truck. The shown system does not pertain to a vertically movable floor situated above a first floor, nor does it show segmented hydraulic cylinders.

In an embodiment the floor is substantially rectangular and is connected to two hydraulic cylinders at its leading edge corners (with respect to the front side of the transporting unit) and two hydraulic cylinders at its trailing edge corners, the leading edge cylinders being actuable independent from the trailing edge cylinders. In this embodiment the floor is connected at (i.e. near) its four corners with the cylinders. By having a constitution wherein the leading edge cylinders can be actuated independently from the trailing edge cylinders, the floor can be tilted to make loading and unloading of cargo, in particular vehicular cargo easier.

In another embodiment the hydraulic cylinders are such that elevating and lowering of the floor requires hydraulic actuation. In this embodiment not only the elevating of the floor requires hydraulic actuation, but also the lowering. In theory one could dispense with using hydraulic actuation to lower a floor, since gravitational forces could also be used to lower the floor. However, using gravitational forces means that the speed at which the floor is lowered cannot be controlled. By using cylinders that need hydraulic actuation for expanding as well as contracting (which cylinders are commonly known as such), improved control is obtained.

In yet another embodiment each segmented cylinder comprises multiple separate hydraulic cylinders rigidly connected to each other. In this embodiment the segmentation to provide the multiple hydraulic actions arises from the use of separate cylinders which are rigidly coupled. Applicant found that this type of segmented cylinders is ideally suitable for precise control. Other types of cylinders such as telescopic multiple action hydraulic cylinders are more difficult to control and more sensitive for leakage. In a further embodiment of the coupled type segmented cylinders, three cylinders are coupled in a M-like formation to form the segmented hydraulic cylinder. It appears that this type of cylinder is ideally suitable in the present transporting unit since a momentum at the base of the cylinder (where it is connected to the vertically extending frame part) can be prevented or at least minimised when moving or tilting the floor.

In an embodiment the floor is in operative engagement with at least one of the said frame parts, such that a horizontal movement of the floor is substantially prevented. Applicant realised that since the floor is in hanging engagement, it is prone to relative high swinging forces, for example when the transporting unit undergoes severe acceleration or braking. In order to prevent or at least minimize horizontal movement of the floor as a result of swinging forces, the floor has been brought in operative engagement with at least one of the frame parts. Typically, this engagement is such that the vertical movement of the floor is not obstructed.

In yet another embodiment the transporting unit comprises multiple contiguous (proximate) floors, each being vertically movable. Together, when at the same vertical height, the floors form one single carrying plane. The availability of multiple floors increases the versatility of the transporting unit. In particular, it provides for more flexibility for carrying vehicular and non-vehicular cargo at the same time.

In an embodiment the transporting unit comprises an on-board power unit to supply the power needed for the hydraulic cylinders to provide the vertical movement. Indeed, use cold be made of an external power unit, for example an engine and multiple batteries, but this means that at the time of loading and unloading such an external power unit has to be present. Using an on-board power unit increases the ease of use.

In yet another embodiment the hydraulic cylinders are in hinging connection with the frame parts. In this embodiment, the hydraulic cylinders could be hinged away from the floor after they have been de-connected from this floor. This provides the advantage that even a larger loading width appears. In particular when the unit is used for non-vehicular cargo, the inner width of the transporting unit is very important for making optimal use of the space available. By uncoupling the hydraulic cylinders from the floor (when this floor is in its lowest possible position), and hinging them away from the sides of the transporting unit (towards the top end), one can make even more loading width available.

In an embodiment the transporting unit is a non-motorised trailer for combination with a motorised vehicle, in particular a truck, to enable road haulage of the unit. In an alternative embodiment the transporting unit is a self-supporting non-motorised container for combination with a wheeled carrying vehicle to enable road haulage. Such a container is for example described in co-pending European patent application 07076008.7 filed 21 November 2007, assigned to Getrex Special Products BV.

The invention also pertains to the use of a transporting unit as described here-above for alternately or simultaneously carrying vehicular and non-vehicular cargo.

The invention will be further explained by using the following non-limiting examples of a specific embodiment of the transporting unit according to the invention.
Figure 1 schematically depicts a transporting unit according to the invention.
Figure 2 shows a vertically movable floor used in the unit according to figure 1.
Figure 3 schematically shows two types of segmented hydraulic cylinders for use in the present invention.
Figure 4 is a schematic rear view inside the unit according to figure 1, presenting a frame part and a connected hydraulic cylinder in greater detail.
Figure 5 is a top view of parts as shown in figure 4.

### Figure 1

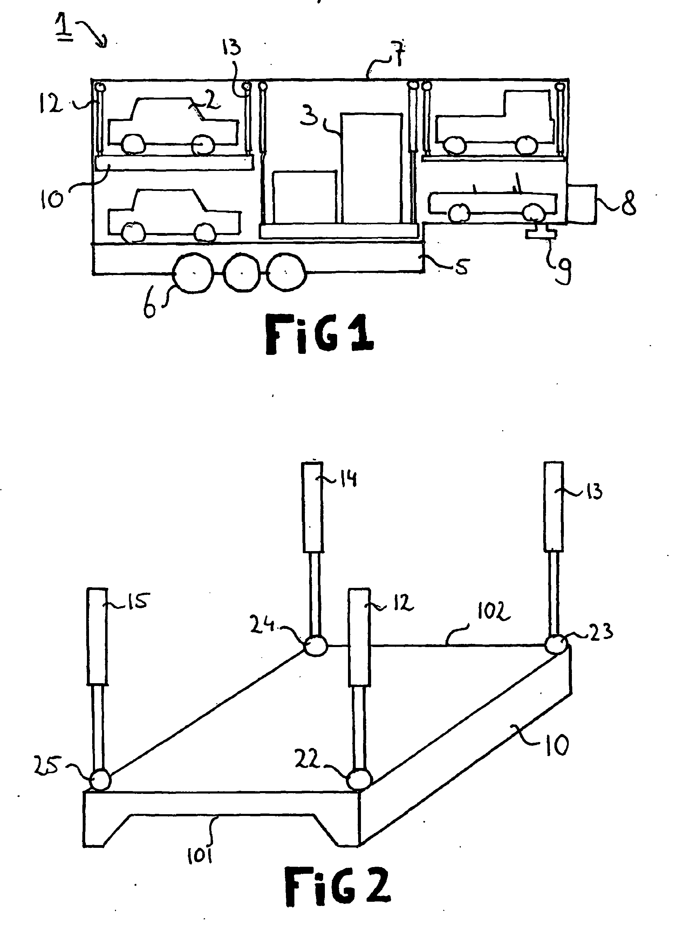

Figure 1 schematically depicts a transporting unit according to the invention. In this embodiment, the transporting unit 1 is a non-motorised trailer for combination with a truck. The unit comprises an elongated, substantially horizontal (at least during circumstances where the supporting surface such as a road, which is not shown, is substantially horizontal) chassis 5, provided by three pairs of wheels 6. Part of the chassis is a connecting piece 9 which serves for providing a removable connection to a truck. The unit is provided with a roof 7 at its top end and a power unit 8 at the leading edge of the transporting unit 1. In another embodiment the power unit is comprised in lockers underneath the chassis 5. The power unit comprises two high capacity batteries (not shown) for driving a generator which on its turn drives a pump (not shown). This pump provides the hydraulic pressure needed for the hydraulic cylinders 12 and 13. In the unit there is present vehicular cargo 2, in this case three automobiles and a light truck, as well as non-vehicular cargo 3, in this case multiple boxes. The cargo is carried by multiple floors 10. Each of the floors is in hanging engagement with four segmented hydraulic cylinders (12, 13) that are rigidly connected to the floor around its circumference (please note that the cylinders are not depicted as segmented cylinder in this figure, although they are so). At the top end, near the roof 7, the cylinders are rigidly connected to frame parts (not shown) that extend from the chassis 5 to the top end. This way, each floor is stably carried by the hydraulic cylinders. By extending or retracting the cylinders each floor 10 can moved vertically. It is preferred that the movement of the cylinders is congruent, i.e. the movement of the cylinders should be corresponding to one another. For this, several options are known in the art. Preferably one chooses for a coupling of the movement such as known for example from GB 2 242 654. Another option is to have a system that monitors the actual movement of each cylinder, which monitoring is used to fine-tune the exact movement of each cylinder. In this particular embodiment, the elevating of the floors 10 as well as the lowering of the floors requires hydraulic pressure. The pressure is generated by the power unit 8 and lead to the multiple cylinders via adequate hydraulic tubing (not shown).

### Figure 2

Figure 2 shows a vertically movable floor used in the unit according to figure 1. As can be seen in figure 2, floor 10 is in essence a rectangular floor, having a leading edge 102 and a trailing edge 101. At the leading edge, the floor is rigidly connected to segmented hydraulic cylinders 13 and 14 (note that the cylinders are not depicted as being segmented) at the corners. At the trailing edge, the floor 10 is rigidly connected to segmented hydraulic cylinders 12 and 15. In this embodiment, the leading edge cylinders 13 and 14 can be actuated independently from the trailing edge cylinders 12 and 15. This way, the floor 10 can be tilted to make loading and un-loading of cargo, in particular wheeled cargo more convenient. The rigid connections 22, 23, 24 and 25 allow that the floor 10 is tilted with respect to the cylinders 12, 13, 14 and 15 respectively. For this, the connections are constituted as a hinge: rigid but allowing an angle other than 90° between the floor and each of the hydraulic cylinders.

### Figure 3

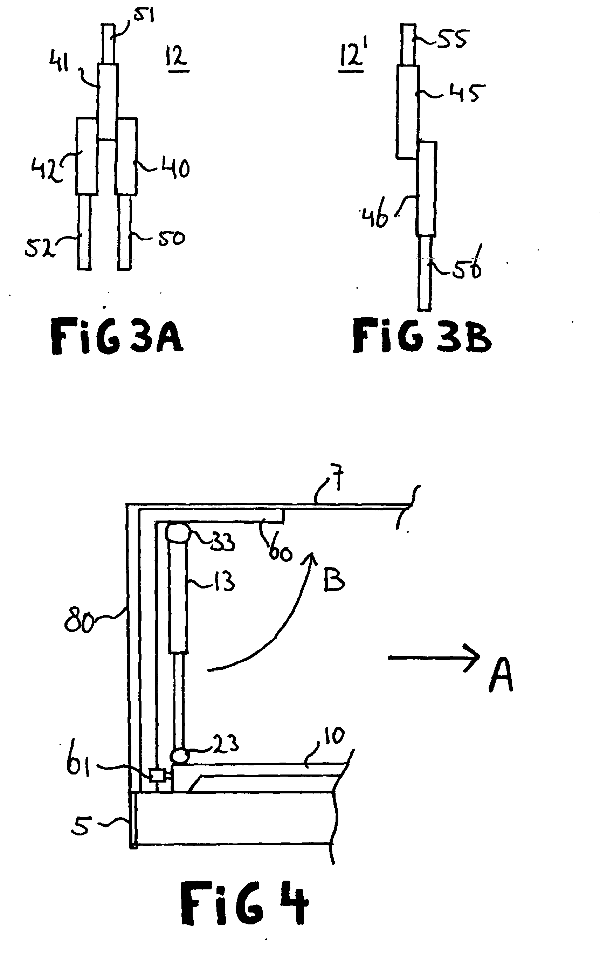

Figure 3 schematically shows two types of segmented hydraulic cylinders12 and 12', for use in the present invention. Figure 3a shows a first cylinder 12 in a Y-like formation of three separate cylinders 40, 41 and 42 with pistons 50, 51 and 52 respectively. The cylinders are rigidly connected. In preferred embodiment the overlap between the separate cylinders is higher, up to substantially 100% such that the cylinders are arranged in an M-like formation. This way, the total length of the segmented cylinder in a completely retracted situation is very short. In figure 3b a second segmented cylinder 12' is depicted. This cylinder is comprised of separate cylinders 45 and 46, with corresponding pistons 55 and 56. Again, it is preferred that the overlap between the separate cylinders 45 and 46 is higher, up to substantially 100% for the same reason as indicated here-before.

Applicant found that a non-segmented cylinder, at least the ones commercially available, is not able to withstand the radial and tangential forces that the cylinder typically undergoes during normal use. By segmenting the cylinder it was found that a cylinder can be arrived at that is sufficiently strong to withstand those forces.

### Figure 4

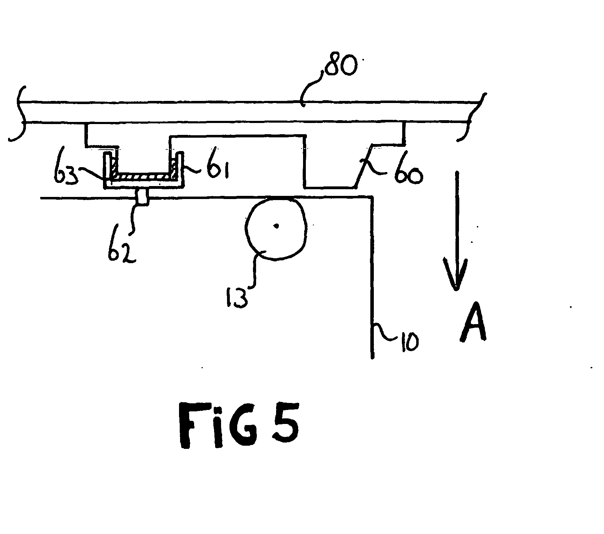

Figure 4 is a schematic rear view inside the transporting unit 1 according to figure 1, presenting a frame part 60 and a connected hydraulic cylinder 13 in greater detail. As can be seen, frame part 60 is an L-shaped article (at least in this view which is directed from the trailing edge of the unit 1 to the leading edge). It extends substantially vertical, starting at chassis 5 end ending right underneath roof 7 of the trailer. It has a horizontal portion on which the roof lies (and is connected to). At the side, a panel 80 is present which closes the side of the trailer.
The hydraulic cylinder 13 is rigidly connected to the horizontal part of frame part 60 by connecting part 33. This part allows turning of the cylinder 13 (if de-connected from floor 10 by releasing rigid connection 23) towards roof 7 along line B. This way, when the floor does not need vertical movement, the cylinder can be turned away from the side to enlarge the inner width of the trailer.
Floor 10 is in operative engagement with frame part 60 via element 61. This operative connection allows vertical movement of the floor while maintaining the same type of connection between the floor 10 and the frame part. Also, this connection via element 61 allows that the floor 10 is tilted with respect to the frame part and still keeps its operative connection. In the figure a direction A is depicted. This direction correspond to the direction A in figure 5.

### Figure 5

Figure 5 is a top view of parts as shown in figure 4. The side panel 80 is shown as well as a cross section of the vertically extending part of frame part 60. It can be seen that this vertically extending part is profiled, which increases its stiffness and allows the part to be operatively connected to the floor via element 61. This element in fact encloses part of frame part 60, which enclosure is filled with nylon 63. The nylon allows that part 61 can easily slide along the frame part without to much heat being produced. Part 61 is connected to floor 10 via element 62. The latter element has an internal bearing that allows floor 10 to be tilted with respect to frame part 60.

## Claims

1. Transporting unit (1) suitable for carrying vehicular (2) and non-vehicular (3) cargo comprising:
- a chassis (5) extending substantially in a horizontal plane,
- a first floor covering the chassis,
- a vertically movable floor (10) situated above the first floor, for carrying at least part of the cargo,
- multiple frame parts (60), vertically extending from the chassis (5) to a position adjacent a top end (7) of de transporting unit (1), **characterised in that** the transporting unit comprises:
- multiple segmented hydraulic cylinders (12, 13, 14, 15) rigidly connected to the vertically movable floor (10) around its circumference for providing the vertical movement, wherein
each hydraulic cylinder (12, 13, 14, 15) is connected to a corresponding frame part (60) near the said position such that the vertically movable floor (10) is in hanging engagement with the cylinders (12, 13, 14, 15) around its circumference.

2. Transporting unit (1) according to claim 1, **characterised in that** the unit (1) comprises multiple contiguous vertically movable floors (10), wherein each floor (10) is in hanging engagement with multiple segmented hydraulic cylinders around its circumference.

3. Transporting unit (1) according to any of the preceding claims, **characterised in that** the vertically movable floor (10) is substantially rectangular and is connected to two hydraulic cylinders (13, 14) at its leading edge (102) corners and two hydraulic cylinders (12, 15) at its trailing edge (101) corners, the leading edge cylinders(13, 14) being actuable independent from the trailing edge cylinders (12, 15).

4. Transporting unit (1) according to any of the preceding claims, **characterised in that** the hydraulic cylinders (12, 13, 14, 15) are such that elevating and lowering of the floor requires hydraulic actuation.

5. Transporting unit (1) according to any of the preceding claims, **characterised in that** each segmented cylinder (12, 13, 14, 15) comprises multiple separate hydraulic cylinders (40, 41, 42; 45, 46) rigidly connected to each other.

6. Transporting unit (1) according to claim 5, **characterised in that** three cylinders (40, 41, 42) are coupled in a M-like formation to form the segmented hydraulic cylinder (12).

7. Transporting unit (1) according to any of the preceding claims, **characterised in that** the vertically movable floor (10) is in operative engagement with at least one of the said frame parts (60), such that a horizontal movement of the floor (10) is substantially prevented.

8. Transporting unit (1) according to any of the preceding claims, **characterised in that** the unit (1) comprises an on-board power unit (8) to supply the power needed for the hydraulic cylinders (12, 13, 14, 15) to provide the vertical movement.

9. Transporting unit (1) according to any of the preceding claims, **characterised in that** the hydraulic cylinders (12, 13, 14, 15) are in hinging connection (33) with the frame parts (60).

10. Transporting unit (1) according to any of the preceding claims, **characterised in that** the unit (1) is a wheeled non-motorised trailer for combination with a motorised vehicle, in particular a truck, to enable road haulage of the unit (1).

11. Transporting unit (1) according to any of the claims 1 to 9, **characterised in that** the unit (1) is a self-supporting non-motorised container for combination with a wheeled carrying vehicle to enable road haulage of the unit (1).

12. Use of a transporting unit (1) according to any of the preceding claims for alternately or simultaneously carrying vehicular (2) and non-vehicular (3) cargo.

## Patentansprüche

1. Transporteinheit (1), geeignet zur Aufnahme von Ladung in Form von Fahrzeugen (2) und anderer Ladung (3), mit:
- einem Chassis (5), das sich im wesentlichen in einer waagerechten Ebene erstreckt,
- einem das Chassis bedeckenden ersten Boden,
- einen vertikalbeweglichen Boden (10), der sich oberhalb des ersten Bodens befindet, zur Aufnahme wenigstens eines Teils der Ladung,
- mehreren Gestellteilen (60), die sich von dem Chassis (5) aus vertikal in eine Position angrenzend an ein oberes Ende (7) der Transporteinheit (1) erstrecken, **dadurch gekennzeichnet, dass** die Transporteinheit aufweist:
- mehrere segmentierte Hydraulikzylinder (12, 13, 14, 15), die um den Umfang des vertikalbeweglichen Bodens (10) herum starr mit diesem verbunden sind, um die vertikale Bewegung zu erzeugen,
- wobei jeder Hydraulikzylinder (12, 13, 14, 15) mit einem entsprechenden Rahmenteil (60) in der Nähe dieser Position verbunden ist, so dass der vertikalbewegliche Boden (10) hängend mit den Zylindern (12, 13, 14) um seinen Umfang herum in Eingriff steht.

2. Transporteinheit (1) nach Anspruch 1, **dadurch gekennzeichnet, dass** die Einheit (1) mehrere benachbarte vertikalbewegliche Böden (10) aufweist, wobei jeder Boden (10) hängend mit mehreren segmentierten Hydraulikzylindern um seinen Umfang herum in Eingriff steht.

3. Transporteinheit (1) nach einem der vorstehenden Ansprüche, **dadurch gekennzeichnet, dass** der vertikalbewegliche Boden (10) im wesentlichen rechteckig ist und mit zwei Hydraulikzylindern (13, 14) an den Ecken seiner vorderen Kante (102) und zwei Hydraulikzylindern (12, 15) an den Ecken seiner hinteren Kante (101) verbunden ist, wobei die Zylinder (13, 14) an der vorderen Kante unabhängig von den Zylindern (12, 15) an der hinteren Kante betätigbar sind.

4. Transporteinheit (1) nach einem der vorstehenden Ansprüche, **dadurch gekennzeichnet, dass** die Hydraulikzylinder (12, 13, 14, 15) so ausgebildet sind, dass das Anheben und Absenken des Bodens eine hydraulische Betätigung erfordert.

5. Transporteinheit (1) nach einem der vorstehenden Ansprüche, **dadurch gekennzeichnet, dass** jeder segmentierte Zylinder (12, 13, 14, 15) mehrere separate Hydraulikzylinder (40, 41, 42; 45, 46) aufweist, die starr miteinander verbunden sind.

6. Transporteinheit (1) nach Anspruch 5, **dadurch gekennzeichnet, dass** drei Zylinder (40, 41, 42) in einer M-förmigen Formation gekoppelt sind, um den Hydraulikzylinder (12) zu bilden.

7. Transporteinheit (1) nach einem der vorstehenden Ansprüche, **dadurch gekennzeichnet, dass** der vertikalbewegliche Boden (10) mit wenigstens einem der Gestellteile (60) derart wirkverbunden ist, dass eine horizontale Bewegung des Bodens (10) im wesentlichen verhindert wird.

8. Transporteinheit (1) nach einem der vorstehenden Ansprüche, **dadurch gekennzeichnet, dass** die Einheit (1) eine bordeigene Leistungseinheit (8) zur Bereitstellung der Leistung aufweist, die die Hydraulikzylinder (12, 13, 14, 15) zur Erzeugung der vertikalen Bewegung benötigen.

9. Transporteinheit (1) nach einem der vorstehenden Ansprüche, **dadurch gekennzeichnet, dass** die Hydraulikzylinder (12, 13, 14, 15) scharnierförmig (33) mit den Gestellteilen (60) verbunden sind.

10. Transporteinheit (1) nach einem der vorstehenden Ansprüche, **dadurch gekennzeichnet, dass** die Einheit (1) ein mit Rädern versehener, nicht motorisierter Anhänger zum Anhängen an ein motorisiertes Fahrzeug, insbesondere eine Zugmaschine ist, um ein Schleppen der Einheit (1) auf der Straße zu ermöglichen.

11. Transporteinheit (1) nach einem der Ansprüche 1 bis 9, **dadurch gekennzeichnet, dass** die Einheit (1) ein selbsttragender, nicht motorisierter Container zur Kombination mit einem mit Rädern versehenen Transportfahrzeug ist, um ein Schleppen der Einheit (1) auf der Straße zu ermöglichen.

12. Verwendung einer Transporteinheit (1) nach einem der vorstehenden Ansprüche zur alternativen oder gleichzeitigen Aufnahme von Ladung in der Form von Fahrzeugen (2) und anderer Ladung (3).

## Revendications

1. Unité de transport (1) pour transporter un chargement composé de véhicules (2) et de non-véhicules (3), comprenant :
- un châssis (5) s'étendant sensiblement dans un plan horizontal,
- un premier plancher couvrant le châssis,
- un plancher mobile verticalement (10) situé au-dessus du premier plancher, pour porter au moins une partie du chargement,
- de multiples pièces (60) de cadres, s'étendant verticalement depuis le châssis (5) jusqu'à un emplacement adjacent à une extrémité supérieure (7) de l'unité de transport (1), **caractérisée en ce que** l'unité de transport comprend:
de multiples vérins hydrauliques segmentés (12, 13, 14, 15) faisant corps avec le plancher mobile verticalement (10) sur son pourtour pour réaliser le mouvement vertical, chaque vérin hydraulique (12, 13, 14, 15) étant accouplé avec une pièce de cadre correspondante (60) près dudit emplacement de façon que le plancher mobile verticalement (10) soit suspendu sous l'action des vérins (12, 13, 14, 15) sur son pourtour.

2. Unité de transport (1) selon la revendication 1, **caractérisée en ce que** l'unité (1) comprend de multiples planchers contigus mobiles verticalement (10), chaque plancher (10) étant suspendu sous l'action de multiples vérins hydrauliques segmentés sur son pourtour.

3. Unité de transport (1) selon l'une quelconque des revendications précédentes, **caractérisée en ce que** le plancher mobile verticalement (10) est sensiblement rectangulaire et est accouplé avec deux vérins hydrauliques (13, 14) dans les angles de son bord avant (102) et deux vérins hydrauliques (12, 15) dans les angles de son bord arrière (101), les vérins (13, 14) du bord avant étant actionnables indépendamment des vérins (12, 15) du bord arrière.

4. Unité de transport (1) selon l'une quelconque des revendications précédentes, **caractérisée en ce que** les vérins hydrauliques (12, 13, 14, 15) sont tels qu'il faut un actionnement hydraulique pour lever et baisser le plancher.

5. Unité de transport (1) selon l'une quelconque des revendications précédentes, **caractérisée en ce que** chaque vérin segmenté (12, 13, 14, 15) comporte de multiples vérins hydrauliques séparés (40, 41, 42 ; 45, 46) solidaires les uns des autres.

6. Unité de transport (1) selon la revendication 5, **caractérisée en ce que** trois vérins (40, 41, 42) sont groupés en une formation en M pour constituer le vérin hydraulique segmenté (12).

7. Unité de transport (1) selon l'une quelconque des revendications précédentes, **caractérisée en ce que** le plancher mobile verticalement (10) coopère avec au moins une desdites pièces (60) de cadres, de façon qu'un mouvement horizontal du plancher (10) soit sensiblement empêché.

8. Unité de transport (1) selon l'une quelconque des revendications précédentes, **caractérisée en ce que** l'unité (1) comprend un groupe moteur embarqué (8) destiné à fournir aux vérins hydrauliques (12, 13, 14, 15) l'énergie nécessaire à la réalisation du mouvement vertical.

9. Unité de transport (1) selon l'une quelconque des revendications précédentes, **caractérisée en ce que** les vérins hydrauliques (12, 13, 14, 15) sont articulés (33) avec les pièces (60) de cadres.

10. Unité de transport (1) selon l'une quelconque des revendications précédentes, **caractérisée en ce que** l'unité (1) est une remorque non motorisée à roues à associer à un véhicule motorisé, en particulier un camion, pour permettre un remorquage sur route de l'unité (1).

11. Unité de transport (1) selon l'une quelconque des revendications 1 à 9, **caractérisée en ce que** l'unité (1) est un conteneur autoportant non motorisé à associer à un véhicule de transport à roues pour permettre le remorquage sur route de l'unité (1).

12. Utilisation d'une unité de transport (1) selon l'une quelconque des revendications précédentes pour transporter en alternance ou simultanément un chargement composé de véhicules (2) et de non-véhicules (3).
